# FASCICULE DE BREVET EUROPEEN

(11) **EP 2 966 963 B1**
(45) Date de publication et mention de la délivrance du brevet: **29.03.2017**
(21) Numéro de dépôt: 14706868.8
(22) Date de dépôt: 07.01.2014
(51) Int. Cl.: A01C 3/02, B65D 88/42, C02F 11/04

(54) **DISPOSITIF DE RÉCUPÉRATION SÉPARÉE DE BIOGAZ ET D'EAU DE PLUIE POUR OUVRAGE DE STOCKAGE D'EFFLUENTS LIQUIDES CHARGÉS TELS QUE DES LISIERS**
VORRICHTUNG ZUR SEPARATEN RÜCKGEWINNUNG VON BIOGAS UND REGENWASSER FÜR EINE STRUKTUR ZUR LAGERUNG VON FLÜSSIGABFÄLLEN WIE JAUCHE
DEVICE FOR THE SEPARATE RECOVERY OF BIOGAS AND RAINWATER FOR A STRUCTURE FOR STORING LOADED LIQUID EFFLUENTS SUCH AS LIQUID MANURE

(30) Priorité: 09.01.2013 FR 1300035
(43) Date de publication de la demande: 20.01.2016
(73) Titulaire: Engel, Rémy Marie Arnaud, 75020 Paris (FR); Moncorger, Jeoffrey Jean Raymond, 91830 Le Coudray-Montceaux (FR)
(72) Inventeur: Engel, Rémy Marie Arnaud, 75020 Paris (FR); Moncorger, Jeoffrey Jean Raymond, 91830 Le Coudray-Montceaux (FR)
(74) Mandataire: Hammond, William
(86) Numéro de dépôt international: PCT/FR2014/000004
(87) Numéro de publication internationale: WO 2014/108624

(56) Documents cités:
- CH-A5- 662 748
- DE-A1- 19 650 055
- DE-U1- 9 011 288
- NL-A- 9 100 072
- US-A- 2 981 437

## Description

La présente invention est relative à un dispositif de récupération séparée de biogaz et d'eau de pluie pour ouvrage de stockage d'effluents liquides chargés et ouvrage le comportant.

Les ouvrages de stockage des effluents liquides (notamment des lisiers issus de l'élevage) sont le plus souvent des cuves en béton de formes diverses, ouvertes dans leur partie supérieure. Ils permettent de stocker, de manière étanche, les effluents liquides chargés. La réalisation des opérations de remplissage, de vidange, et de curage se font de manière simple et en toute sécurité. L'ouverture de ces ouvrages dans leur partie supérieure provoque des nuisances environnementales (odeurs, émissions de gaz à effet de serre) et implique une dilution des effluents par l'eau de pluie. Cela augmente les volumes à épandre et donc les coûts liés à l'épandage ; cela réduit également la capacité de stockage des ouvrages. Les technologies actuelles de couverture des ouvrages de stockage sont coûteuses. Celles permettant de transformer les ouvrages ouverts en réacteur de méthanisation sont également coûteuses, et rendent difficiles les opérations d'exploitation de tels ouvrages.

En effet, lorsque la destination finale des effluents est la valorisation agronomique (ce qui est le cas par exemple pour les effluents d'élevage), l'usage est d'utiliser une tonne à lisier tractée, avec un système de pompage intégré (tuyau et crépine). Aucun dispositif de méthanisation adaptable de manière simple sur les ouvrages de stockage ne permet un pompage en sécurité via le système classique de tonnes à lisiers.

De plus, il faut éviter que de l'eau de pluie pénètre dans l'ouvrage de stockage et de fermentation : cette eau en diluant le contenu de l'ouvrage entraîne une baisse du temps de résidence moyen des effluents dans la fosse et donc une baisse de rendement en biogaz.

Traditionnellement, les ouvrages de stockage sont couverts par une charpente couplée à une solution de couverture souple (membrane) ou rigide (tôles). Ces solutions permettent de réduire les nuisances environnementales et d'empêcher l'eau de pluie de tomber dans l'ouvrage mais ne permettent pas le captage et la valorisation du biogaz. Le mât central de la charpente doit être installé lorsque la fosse est vide, ce qui limite les périodes où l'installation de la couverture est possible.
Des couvertures flottantes constituées d'une membrane et de flotteurs existent, comme celles conçues et installées par l'entreprise Fouquet ; elles ne permettent cependant pas le captage du biogaz. D'autres méthodes de couverture des effluents comme l'utilisation de biomasse sèche déposée à la surface des effluents existent. Ces méthodes permettent de limiter les odeurs mais pas de recueillir le biogaz et l'eau de pluie.

En ce qui concerne l'état de l'art des ensembles constitués d'un ouvrage de stockage et d'une couverture souple joints de manière étanche et permettant la méthanisation, on distingue plusieurs technologies.

Les documents DE-10 2010 053 242-A, EP-0 521 302-A et WO-2010024693-A présentent des digesteurs classiques avec récupération et stockage étanche du biogaz, complétés ou non d'un dispositif de captage de l'eau de pluie. Ces dispositifs sont performants en matière de méthanisation, mais la réalisation de l'étanchéité entre la membrane et la cuve est complexe et coûteuse. Le pompage sécurisé des effluents par tonne à lisier y est impossible.

Si l'on prend en compte les dispositifs flottants, le document DE-19608996-A décrit un système de flottaison permettant d'adapter le volume de stockage du biogaz au-dessus des effluents. Cependant ce système, guidé par un axe central, nécessite le maintien de l'étanchéité grâce à une fixation non réversible de la partie mobile sur l'ouvrage de stockage et demande donc des installations spécifiques coûteuses pour la manutention sécurisée des effluents.

Le document AT-195459-B décrit un gazomètre flottant rigide recouvrant la quasi-totalité de la surface de l'effluent. Il ne permet donc pas la récupération de l'eau de pluie. De plus, il est impossible de pomper les effluents présents dans l'ouvrage avec un dispositif du type tonne à lisier. Enfin, la rigidité du gazomètre complique l'installation de ce système sur des ouvrages de grand diamètre.

En Allemagne, l'entreprise Agronet a déposé une demande de brevet (numéro DE-20011015623-A) pour un système de gazomètre muni de flotteurs. Ce système ne permet pas la récupération de l'eau de pluie. Il doit donc être installé sous une autre couverture, le protégeant du vent et de la pluie, ce qui augmente les coûts.

Les documents CH-662748-A et EP-2 175 015-A décrivent également un dispositif de gazomètre souple muni de flotteurs. Ces dispositifs sont constitués d'une seule pièce de membrane : ils ne permettent en aucun cas la création d'un espace de stockage de l'eau de pluie.
Au Canada, l'entreprise GTI a construit une couverture en membrane fixée au sommet des parois verticales de l'ouvrage de stockage et reposant sur l'effluent. Ce dispositif permet de stocker et valoriser à la fois le biogaz et l'eau de pluie. L'étanchéité de la jonction entre la membrane et le béton est coûteuse et rarement parfaite, ce qui occasionne des pertes de biogaz et des entrées d'air dans la réserve de biogaz, rendant ce dernier inutilisable. Lors des opérations d'agitation, de pompage ou de curage de l'ouvrage, il faut ouvrir la membrane, ce qui pose d'importants problèmes de sécurité (explosivité du mélange air/biogaz, intoxications au H₂S).

Aussi un des buts de la présente invention est-il de fournir un dispositif de récupération séparée de biogaz et d'eau de pluie pour ouvrage de stockage d'effluents liquides chargés, qui permet d'obvier les inconvénients des installations connues.

Un autre but de l'invention est de fournir un tel dispositif à un coût faible et adaptable sur tout type d'ouvrage actuel de stockage d'effluents liquides chargés.

Ces buts, ainsi que d'autres qui apparaîtront par la suite, sont atteints par un dispositif de récupération séparée de biogaz et d'eau de pluie pour ouvrage de stockage d'effluents liquides chargés tels que des lisiers, comprenant une première membrane sensiblement horizontale et recouvrant sensiblement toute la surface de l'effluent liquide chargé, lequel dispositif est, selon la présente invention, caractérisé par le fait qu'il comprend une seconde membrane sensiblement verticale, disposée tout autour de la première membrane et constituée d'une partie inférieure et d'une partie supérieure disposées de part et d'autre de la première membrane formant ainsi deux espaces de stockage, et qu'il comprend aussi des moyens pour évacuer du biogaz et de l'eau de pluie.

Avantageusement, un tel dispositif de récupération comprend des moyens de guidage constitués par des anneaux disposés verticalement par paire sur la seconde membrane et coopérant avec des filins métalliques disposés sur la paroi verticale de l'ouvrage.

De préférence, ce dispositif de récupération comprend en outre des éléments de flottaison qui sont fixés sur la partie inférieure de la seconde membrane.

Avantageusement, ce dispositif de récupération comprend aussi des lests placés à distance variable des éléments de flottaison et fixés sous eux.

Selon un mode de réalisation préféré de l'invention, dans une paire d'anneaux, l'un est rendu solidaire d'un élément de flottaison.

Comme mentionné plus haut, la présente invention concerne également un ouvrage de stockage d'effluents liquides chargés tels que des lisiers, qui comprend un dispositif de récupération séparée du biogaz et de l'eau de pluie tel que défini ci-dessus.

La description qui va suivre et qui ne présente aucun caractère limitatif, doit être lue en regard des figures annexées, parmi lesquelles :

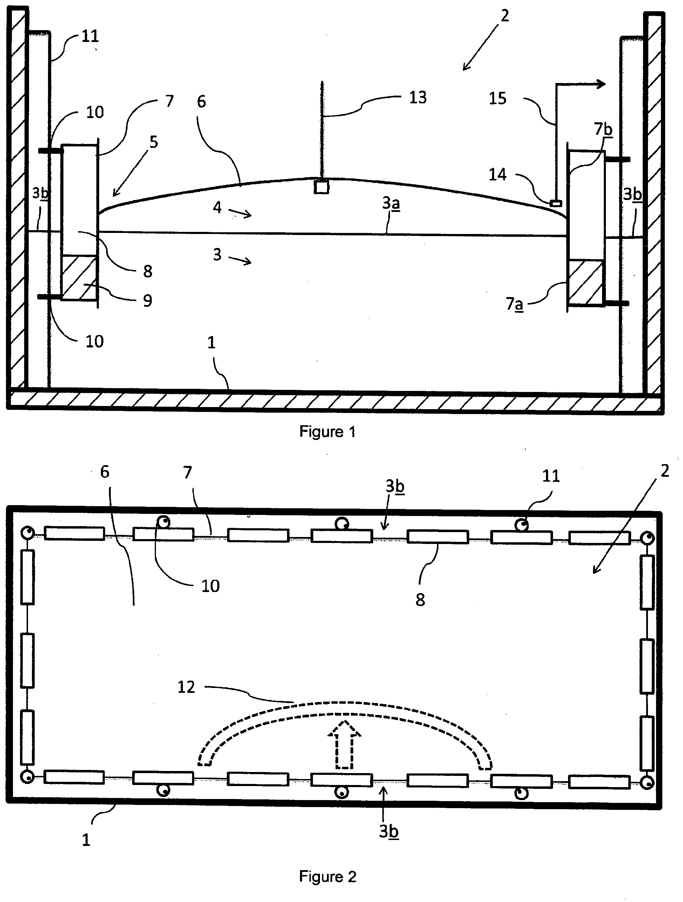

- La figure 1 représente en coupe verticale un dispositif selon la présente invention, intégré dans un ouvrage de stockage d'effluents liquides chargés ; et,
- La figure 2 représente, en vue de dessus, l'objet de la figure 1.

Ainsi qu'on peut le voir sur ces figures, un ouvrage de stockage d'effluents liquides chargés désigné dans son ensemble par la référence 1 est, selon le présent exemple de réalisation, de forme parallélépipédique.

Selon la présente invention, cet ouvrage comporte un dispositif de récupération, désigné dans son ensemble par la référence 2, qui flotte sur l'effluent liquide chargé 3 : il recouvre la totalité de la surface 3a de cet effluent 3, laissant une surface périphérique 3b, aussi étroite que possible, de l'effluent 3 en contact avec l'air libre, ce qui permet d'effectuer simplement les opérations de pompage des effluents sans perturber les performances de la méthanisation.

Le dispositif de récupération 2 est composé de deux pièces de membrane souple (de type PVC - Polychlorure de vinyle - ou EPDM - Ethylène Propylène Diène Monomère -) : la première 6, sensiblement horizontale, disposée au-dessus de la surface 3a de l'effluent 3, et permettant le stockage de biogaz 4 entre elle et cette surface ; la seconde 7, sensiblement verticale, placée sur tout le pourtour de la première membrane 6. Cette seconde membrane 7 comprend, de part et d'autre de la membrane 6, une partie inférieure 7a toujours immergée dans l'effluent 3, assurant ainsi l'étanchéité entre le biogaz et l'atmosphère, et une partie supérieure 7b restant toujours émergée. Cette dernière forme avec la première membrane 6 un réservoir pour de l'eau de pluie 5.

La jonction entre les deux membranes 6 et 7 est étanche à la fois aux gaz et aux liquides et résistante aux contraintes mécaniques ; par exemple, les membranes pourront être thermo-soudées. Le réglage de la hauteur de cette jonction, formant un « T » entre la membrane horizontale 6 et la membrane verticale 7, permet de dimensionner les volumes de stockage de biogaz et d'eau de pluie en fonction des cas.

Le dispositif de récupération 2 délimite à tout moment les trois espaces de stockage : le stockage de l'effluent liquide 3 dans lequel se déroule la digestion bactérienne, le stockage du biogaz 4 dont le volume varie, et enfin le stockage de l'eau de pluie 5 à l'air libre. Chacun de ces fluides pourra donc être valorisé séparément.

Des éléments de flottaison 8, comme par exemple une série de flotteurs ou un boudin flotteur, sont fixés à la seconde membrane 7. Des lests 9, placés à distance variable de ou des éléments de flottaison et fixés sous les flotteurs, assureront par leur immersion permanente l'étanchéité de la réserve de biogaz. Ces lests pourront, par exemple, être constitués de béton coulé dans le flotteur 8.

Le dispositif de récupération 2 peut également comporter des paires d'éléments de guidage, comme par exemple des anneaux 10 disposés sur la seconde membrane 7, chaque paire coulissant sur un filin métallique vertical 11 fixé sur la face intérieure de la paroi verticale de l'ouvrage 1. Dans une paire d'anneaux 10, l'un est placé sur un flotteur 8. Ainsi le dispositif de récupération 2 peut évoluer librement verticalement tout en limitant d'éventuels mouvements horizontaux. Certains flotteurs 8 pourront être momentanément libérés de leur guidage afin de les déplacer 12 vers le centre de l'ouvrage de stockage 1 et permettre ainsi la réalisation des opérations d'exploitation (vidange, agitation...) dans les meilleures conditions de sécurité (à aucun moment la réserve de biogaz n'est en contact avec l'atmosphère). Par exemple, le pompage des effluents par une tonne à lisiers est sûr et rapide.

Le biogaz, en s'accumulant entre les première et seconde membranes 6 et 7 et la surface 3a de l'effluent 3, monte légèrement en pression et soulève progressivement les flotteurs 8 et leurs lests 9. Des évents, disposés en partie inférieure de la membrane 7a, permettent en cas de non consommation du biogaz par les éléments de valorisation, d'évacuer la surproduction de biogaz dans l'atmosphère et de limiter ainsi la montée en pression. Cet élément de sécurité joue le rôle de soupape de surpression.

Les dispositifs de captage et de transport des différents fluides s'adaptent au niveau d'effluent dans l'ouvrage de stockage :
- Le dispositif d'exportation du biogaz 13, peut être constitué d'un tuyau et d'une crépine, et sera conçu pour ne pas comporter de point bas de condensation.
- Le dispositif de captage de l'eau de pluie est constitué d'une crépine lestée 14 fixée sur la membrane et d'un tuyau d'eau 15 relié à un dispositif d'évacuation (siphon, pompage) vers les utilisations de valorisation de l'eau (irrigation, nettoyage).

Dans le cas d'un élevage, les effluents liquides chargés sont du lisier. La valorisation du biogaz peut se faire sur des radiants pour le chauffage de bandes d'animaux, sur une chaudière adaptée pour le chauffage domestique ou bien sur un moteur ou une turbine produisant de l'électricité. A terme, les procédés de production de biogaz carburant à partir du biogaz produit seront envisagés pour le fonctionnement des tracteurs de l'exploitation. Quant à l'eau de pluie collectée, elle est utilisée par exemple pour le nettoyage de zones d'élevage.

La présente invention concerne donc un dispositif de récupération qui s'intègre à moindre coûts aux différentes géométries d'ouvrage de stockage quel que soit leur niveau de remplissage. Ce dispositif de récupération permet ainsi de transformer tout ouvrage de stockage des effluents liquides chargés en digesteur de méthanisation, sans perturber sa fonction première : le stockage et la manutention des effluents en toute sécurité.

La conception de ce dispositif de récupération lui permet de s'adapter aux variations de niveau d'effluent dans l'ouvrage, tout en conservant ses performances (les volumes disponibles pour le stockage du biogaz et de l'eau de pluie restent constants). La construction du dispositif se faisant avec des éléments standards, son adaptation à différentes géométries d'ouvrages est ainsi facilitée. Installé dans un ouvrage de stockage ouvert, le dispositif de récupération selon la présente invention permet de remplir les fonctions suivantes :
1) Isoler les effluents du contact avec l'atmosphère ce qui a comme conséquences de :
   - Limiter les nuisances olfactives
   - Réduire les émissions de gaz à effet de serre (CH₄, N₂O...)
   - Conserver l'azote dans les effluents (forte valeur fertilisante)
   - Maintenir l'ouvrage de stockage dans des conditions favorisant le processus de méthanisation à savoir l'absence d'oxygène et l'absence de lumière.
2) Recueillir l'eau de pluie pour permettre sa valorisation notamment pour les besoins de nettoyage de l'élevage et pour empêcher la dilution des effluents ce qui aura pour conséquences de :
   - Augmenter la capacité de stockage de l'ouvrage
   - Réduire les coûts d'épandages
   - Augmenter le temps de résidence des effluents dans l'ouvrage de stockage et donc d'améliorer les performances de la méthanisation.
3) Capter le biogaz produit par méthanisation.

L'ensemble comprenant le dispositif de récupération selon la présente invention intégré dans un ouvrage de stockage, forme un réacteur complet de méthanisation permettant la réalisation simple et sécurisée des opérations d'exploitation.

## Revendications

1. Dispositif de récupération séparée de biogaz et d'eau de pluie pour ouvrage (1) de stockage d'effluents (3) liquides chargés tels que des lisiers, comprenant une première membrane (6) sensiblement horizontale recouvrant sensiblement toute la surface (3a) dudit effluent liquide chargé (3), le dispositif comprenant une seconde membrane (7) sensiblement verticale, disposée tout autour de ladite première membrane (6) et constituée d'une partie inférieure (7a) et d'une partie supérieure (7b) disposées de part et d'autre de ladite première membrane (6) formant ainsi deux espaces de stockage, et située tout autour de ladite première membrane (6), le dispositif comprenant aussi des moyens pour évacuer le biogaz et l'eau de pluie.

2. Dispositif de récupération selon la revendication 1, **caractérisé par le fait qu'**il comprend des moyens de guidage constitués par des anneaux (10) disposés verticalement par paire sur la seconde membrane (7) coopérant avec des filins métalliques (11) disposés sur la paroi verticale de l'ouvrage (1).

3. Dispositif de récupération selon la revendication 1, **caractérisé par le fait qu'**il comprend des éléments de flottaison (8) qui sont fixés sur la partie inférieure (7a) de la seconde membrane (7).

4. Dispositif de récupération selon la revendication 3, **caractérisé par le fait qu'**il comprend aussi des lests (9) placés à distance variable des éléments de flottaison (8) et fixés sous eux.

5. Dispositif selon les revendications 2 et 3, **caractérisé par le fait que** dans une paire d'anneaux (10), l'un est rendu solidaire d'un élément de flottaison (8).

6. Ouvrage de stockage d'effluents liquides chargés tels que des lisiers, **caractérisé par le fait qu'**il comprend un dispositif de récupération séparée du biogaz et de l'eau de pluie selon l'une quelconque des revendications 1 à 5.

## Patentansprüche

1. Rückgewinnungsvorrichtung zur getrennten Rückgewinnung von Biogas und Regenwasser für ein Bauwerk (1) zum Speichern von belasteten Abwässern (3), wie beispielsweise Jauche bzw. Gülle, wobei die Vorrichtung eine erste, im wesentlichen horizontale Membran (6) umfasst, welche im Wesentlichen die gesamte Oberfläche (3a) des belasteten Abwassers (3) abdeckt, wobei die Vorrichtung eine zweite, im wesentlichen vertikale Membran (7) umfasst, welche vollumfänglich um die erste Membran (6) angeordnet ist und einen unteren Teil (7a) sowie einen oberen Teil (7b) aufweist, welche beidseitig der ersten Membran (6) angeordnet sind, um so zwei Speicherräume zu bilden, und wobei die Vorrichtung ferner eine Mittel zum Abführen von Biogas und von Regenwasser umfasst.

2. Rückgewinnungsvorrichtung nach Anspruch 1, **dadurch gekennzeichnet, dass** sie Führungsmittel umfasst, welche durch paarweise vertikal angeordnete Ringe (10) auf der zweiten Membran (7) gebildet sind, die im Eingriff mit Drahtseilen (11) stehen, die an einer vertikalen Wand des Bauwerks (1) angeordnet sind.

3. Rückgewinnungsvorrichtung nach Anspruch 1, **dadurch gekennzeichnet, dass** diese Auftriebselemente (8) aufweist, die am unteren Teil (7a) der zweiten Membran (7) befestigt sind.

4. Rückgewinnungsvorrichtung nach Anspruch 3, **dadurch gekennzeichnet, dass** diese ferner Ballaste (9) umfasst, die mit variablem Abstand zu den Auftriebselementen (8) vorgesehen und unter diesen befestigt sind.

5. Rückgewinnungsvorrichtung nach den Ansprüchen 2 und 3, **dadurch gekennzeichnet, dass** bei einem Paar von Ringen (10) ein Ring fest mit einem Auftriebselement (8) verbunden ist.

6. Bauwerk (1) zum Speichern von belasteten Abwässern (3), wie beispielsweise Jauche bzw. Gülle, **dadurch gekennzeichnet, dass** das Bauwerk eine Rückgewinnungsvorrichtung zur getrennten Rückgewinnung von Biogas und Regenwasser nach einem der Ansprüche 1 bis 5 umfasst.

## Claims

1. A device for the separate recovery of biogas and rainwater for a structure (1) for storing loaded liquid effluents (3) such as liquid manure, said device comprising a first substantially horizontal membrane (6) covering substantially all of the surface (3a) of said loaded liquid effluent (3), said device comprising a second substantially vertical membrane (7), which is disposed all around said first membrane (6) and is formed of a lower part (7a) and an upper part (7b) disposed on either side of said first membrane (6), thus forming two storage spaces, said device also comprising means for discharging the biogas and the rainwater.

2. A recovery device according to claim 1, **characterised in that** it comprises guide means formed by rings (10) disposed vertically in pairs on the second membrane (7) and cooperating with metal lines (11) disposed on the vertical wall of the structure (1).

3. A recovery device according to claim 1, **characterised in that** it comprises flotation elements (8), which are fixed on the lower part (7a) of the second membrane (7).

4. A recovery device according to claim 3, **characterised in that** it also comprises ballasts (9) placed at a variable distance from the flotation elements (8) and fixed therebeneath.

5. A device according to claims 2 and 3, **characterised in that**, in a par of rings (10), one of the rings is attached to a flotation element (8).

6. A structure for storing loaded liquid effluents such as liquid manure, **characterised in that** said structure comprises a device for the separate recovery of biogas and rainwater according to any one of claims 1 to 5.
